# EUROPEAN PATENT APPLICATION

(11) **EP 4 485 682 A1**
(43) Date of publication of application: **01.01.2025**
(21) Application number: 23181739.6
(22) Date of filing: 27.06.2023
(51) Int. Cl.: H01P 1/218, G06N 10/40, H01F 6/06, H01B 12/16

(54) **FREQUENCY-TUNABLE COMPONENTS FOR CRYOGENICALLY COOLED MEGAHERTZ- AND GIGAHERTZ-RANGE APPLICATIONS**

(71) Applicant: Bluefors Oy, 00370 Helsinki (FI)
(72) Inventor: LAKE, Russell, 00370 Helsinki (FI); MONARKHA, Volodymyr, 00370 Helsinki (FI); HUDA, Nurul, 00370 Helsinki (FI); SIMBIEROWICZ, Slawomir, 00370 Helsinki (FI); NUUTINEN, Ville, 00370 Helsinki (FI)
(74) Representative: Papula Oy

(57) **Abstract**

A frequency-tunable component for cryogenically cooled applications comprises a YIG sphere (201), i.e. a piece of solid ferrimagnetic or ferromagnetic resonator material with an unloaded Q value larger than 400. One or more input ports (305) and one or more output ports (306) are provided for coupling oscillating signals to and from said YIG sphere (201) at frequencies above 0.5 GHz. A controllable magnet arrangement (204, 205, 301, 302, 401, 402, 503, 504, 505, 506, 602, 903, 1002, 1003) is configured to induce, in response to one or more control signals, a magnetic field at a location of said YIG sphere (201). A magnetic flux density of said induced magnetic field depends on values of said one or more control signals. A common supporting and thermalizing frame (403, 501, 601) is thermally coupled to said YIG sphere (201) and to said controllable magnet arrangement (204, 205, 301, 302, 401, 402, 503, 504, 505, 506, 602, 903, 1002, 1003) and configured to maintain said controllable magnet arrangement (204, 205, 301, 302, 401, 402, 503, 504, 505, 506, 602, 903, 1002, 1003) fixed with respect to said YIG sphere (201).

## Description

### FIELD OF THE INVENTION

The invention is generally related to the processing of megahertz- and gigahertz-range oscillating signals in cryogenically cooled environments. In particular, the invention is related to tunable filters and other components that can be used for selectively passing and/or rejecting signals of desired frequencies.

### BACKGROUND OF THE INVENTION

An important area of application for cryogenic cooling is quantum computing, in which the essential circuitry relies upon signal frequencies in the order of several GHz and must be cooled to very low temperatures, such as only a few millikelvins, for proper operation. There are also other scientific and technological disciplines in which the combination of extremely low temperatures and GHz-range frequencies is of importance.

While the technology for cooling an experimental setup or piece of circuitry to the millikelvin range is well established and routinely available, it remains a fact that the cool-down process is relatively slow. It takes at least a number of hours, and may take more than a whole day, before an arrangement that was at room temperature to begin with reaches the desired low temperature levels. A frequency-selective circuit element, such as a filter or gyrator for example, may be operable on only one frequency or a limited range of frequencies. A considerable delay will occur before an experiment or the like may continue within some alternative parameter range, because the cryostat must be intermittently warmed up, opened for changing components, and cooled down again. For this reason, it would be highly desirable to have access to frequency-tunable components, such as band-pass filters with a tunable pass band or gyrators with tunable switching properties for example.

An established way of making cryogenically cooled frequency-tunable components for microwave frequencies is to use on-chip filters that incorporate SQUIDs (Superconductive Quantum Interference Devices) into a transmission line. Such technology is known, for example, from the patent publication US 9,768,771 B2. While having many advantageous properties, such components are extremely sensitive to flux noise and have many spurious resonances near the band of operation. Additionally, they may suffer from leakage out of band due to spurious modes on the chip or waveguide modes of the filter enclosure.

### SUMMARY

It is an objective to present hardware means that may be used to implement frequency-tunable components in cryogenically cooled environments. Another objective is to present a frequency-tunable signal processing component for use at signal frequencies in the order of several GHz that generates only negligible heat load at extremely low temperatures.

These and further advantageous objectives are achieved by utilising one or more pieces of one or more ferrimagnetic or ferromagnetic resonator materials together with one or more superconductive inductors, the magnetic field(s) of which cause(s) the desired changes in the frequency properties of the ferrimagnetic resonator material(s).

According to an embodiment, there is provided a frequency-tunable component for cryogenically cooled applications, comprising a piece of solid ferrimagnetic or ferromagnetic resonator material with an unloaded Q value larger than 400, referred to below as the YIG sphere. The frequency-tunable component comprises one or more input ports and one or more output ports for coupling oscillating signals to and from said YIG sphere at frequencies above 0.5 GHz and a controllable magnet arrangement configured to induce, in response to one or more control signals, a magnetic field at a location of said YIG sphere, a magnetic flux density of said induced magnetic field being dependent on values of said one or more control signals. The frequency-tunable component comprises a common supporting and thermalizing frame, thermally coupled to said YIG sphere and to said controllable magnet arrangement and configured to maintain said controllable magnet arrangement fixed with respect to said YIG sphere.

According to an embodiment, said controllable magnet arrangement comprises at least one superconductor coil around a part of said common supporting and thermalizing frame. This involves at least the advantage that a magnetic field at the location of the YIG sphere can be controlled in a wide range of relatively high values without causing prohibitive amounts of heating.

According to an embodiment, said controllable magnet arrangement comprises a first superconductor coil and a second superconductor coil, placed along a common axis of cylindrical symmetry. Said YIG sphere may then located on said axis of cylindrical symmetry, between said first superconductor coil and said second superconductor coil in a longitudinal direction of said axis. This involves at least the advantage that a highly homogeneous and straightforwardly controllable magnetic field can be generated.

According to an embodiment, said one or more control signals are one or more bias currents through said superconductor coils. This involves at least the advantage that a control signal generator of a known and easily controllable kind can be used.

According to an embodiment, said superconductor coils are wound of insulated conductor wire that comprises one or more superconductor cores embedded in a normal-metal matrix. This involves at least the advantage that superconductivity can be combined with reasonable structural strength and relatively easy handling in the assembling stages.

According to an embodiment, for connecting said first and second superconductor coils to one or more bias current sources, ends of said insulated conductor wire comprise a bare section of said one or more superconductor cores without said normal-metal matrix. This involves at least the advantage that unwanted thermal bridges at connection points can be avoided.

According to an embodiment, the frequency-tunable component comprises, per each end of said insulated conductor wire, a piece of superconductor material to which the bare section of the respective end of the insulated conductor wire is fixedly attached, for offering a connecting point for further wiring towards said one or more bias current sources, and a thermally conductive but electrically insulating coupling between said piece of superconductor material and a cooled structure. This involves at least the advantage that the connection point can be effectively thermalized to a desired temperature while simultaneously avoiding unwanted leakage currents.

According to an embodiment, said respective end of the insulated conductor wire is spot welded to said piece of superconductor material. This involves at least the advantage that a virtually seamless superconductive connection can be made from one conductor to another conductor.

According to an embodiment, the frequency-tunable component is a filter, a circulator, a gyrator, an isolator, or a resonator. This involves at least the advantage that versatile signal processing can be accomplished at cryogenically cooled temperatures.

According to a second aspect, there is provide a cryogenic cooling system that comprises at least one frequency-tunable component of the kind described above, an outer cover for separating a cryogenically cooled domain from an environment of the cryogenic cooling system, and control signal wiring leading from the outside of the outer cover to the controllable magnet arrangement of the at least one frequency-tunable component.

According to an embodiment, said control signal wiring comprises sections located in parts of the cryogenic cooling system that are configured for cooling to progressively colder temperatures. At least those sections of the control signal wiring that are located in the part of the cryogenic cooling system configured for cooling to the lowest temperature can then be made of superconductor wire. This involves at least the advantage that ohmic losses in the coldest parts of the system can be kept at minimum.

According to an embodiment, said superconductor wire comprises one or more superconductive cores embedded in a normal-metal matrix, said sections of the control signal wiring that are made of said superconductor wire may then comprise thermal breaks in the form of sections of the superconductor wire of which said normal-metal matrix has been removed. This involves at least the advantage that conducted heat from the warmer stages to the colder stages through the control signal wiring can be kept at minimum.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a cryostat with cryogen-free cooling according to known technology,
**figure 2** illustrates a known YIG filter,
**figure 3** illustrates a frequency-tunable component according to an embodiment,
**figure 4** illustrates a frequency-tunable component according to an embodiment,
**figure 5** illustrates a frequency-tunable component according to an embodiment,
**figure 6** illustrates a frequency-tunable component according to an embodiment,
**figure 7** illustrates a detail of a frequency-tunable component according to an embodiment,
**figure 8** illustrates a detail of a frequency-tunable component according to an embodiment,
**figure 9** illustrates a frequency-tunable component in a cryogenically cooled environment,
**figure 10** illustrates an experimental setup for measuring the performance of a tunable filter,
**figure 11** illustrates measurement results from an experimental setup of the kind shown in fig. 10, and
**figure 12** illustrates measurement results from an experimental setup of the kind shown in fig. 10.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

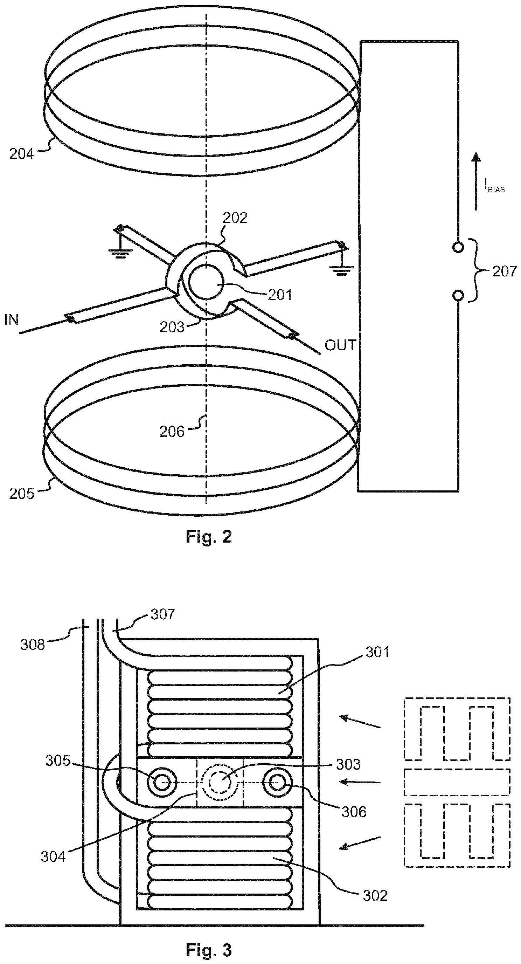

Fig. 2 illustrates schematically a so-called YIG filter, in which the acronym YIG comes from Yttrium Iron Garnet. More generally, the device in question could be called a magnetic resonance filter, as other materials than YIG could be used. YIG is a material commonly used for its exceptionally high Q value (quality factor) in magnetic applications. In the following, the designator YIG is used but it must be construed to mean a ferrimagnetic or ferromagnetic material with a high Q value, such as unloaded Q larger than 400, preferably larger than 1000, preferably larger than 5000, and more preferably larger than 9000.

At the core of a YIG filter is a YIG sphere 201. More generally, the YIG sphere may be characterised as a suitably shaped piece of solid ferrimagnetic or ferromagnetic material with a high Q value. A regular shape such as a sphere has been found advantageous, because it is relatively easy to produce (by tumbling for example) and because it enables uniform coupling. The size of the YIG sphere 201 is not important. In practical applications, YIG spheres in the size range between about 0.5 mm and 1.5 mm have been used. The YIG sphere is supported at an end of a thermally conductive rod (not shown in fig. 2).

Inductive input and output couplings to the YIG sphere 201 are made for example with half-turn-formed loops 202 and 203, oriented perpendicular to each other. In fig. 2, each of said half-turn-formed loops 202 and 203 is shown as constituting the end of a central conductor of a transmission line. One end of the first half-turn-formed loop 202 is an input port to the YIG filter, while the other end is grounded. One end of the second half-turn-formed loop 203 is an output port from the YIG filter, while the other end is grounded. This is an example embodiment of making input and output couplings to the YIG sphere, as other kinds of couplings could also be used.

Ferrite materials such as YIG resonate at microwave frequencies when placed in a DC magnetic field. The resonance frequency depends on the magnetic flux density. The YIG filter in fig. 2 comprises a first coil 204 and a second coil 205, placed coaxially on two opposite sides of the YIG sphere 201 so that the YIG sphere 201 is on the common axis of cylindrical symmetry 206 of the coils 204 and 205. The first and second coils 204 and 205 are connected in series in a bias current circuit, to which a bias current I_{BIAS} can be fed through a bias current input 207. The flow of a bias current I_{BIAS} through the first and second coils 204 and 205 induces a magnetic field, which on the axis of rotational symmetry 206 is essentially uniform and directed along the axis of cylindrical symmetry 206. Instead of two coils, one could use a single coil extending above and below the level at which the YIG sphere 201 is located, or more than two coils. The number of coils is not important, as the decisive aim is just to create as uniform a magnetic field as possible at the location of the YIG sphere 201.

The concept of a YIG filter can be generalised to cover not only filters but also other frequency-tunable components. In this text the designation "frequency-tunable component" means an entity that can be used as a (lumped) circuit element with a controllable frequency response. Examples of frequency-tunable components include but are not limited to low-pass, band-pass, and high-pass filters with selectable pass- and/or stop-bands; gyrators, circulators, and isolators with selectable signal-routing characteristics; resonators with selectable resonance frequency or resonance frequencies; non-reciprocal bandpass filters

In particular, frequency-tunable components for cryogenically cooled applications are described. Applicability for cryogenic cooling involves aspects like material suitability for vacuum conditions, power dissipation at levels significantly lower than the cooling power of known cryogenic coolers, and good thermal conductivity between parts of the component that may dissipate power and attachment means for attaching the component to a cooled external element. In cryogenic technology, a good thermal conductivity may be for example at least 100 W/ (m*K) at or above 10 K, at least 10 W/ (m*K) at 1 K, at least 1 W/ (m*K) at 0.1 K, or at least 0.1 W/(m*K) at 0.01 K.

For applying the principle described above with reference to fig. 2 to frequency-tunable components for cryogenically cooled applications, one may take advantage of a piece of solid ferrimagnetic or ferromagnetic resonator material with an unloaded Q value larger than 400. For concise reference, such a piece of solid ferrimagnetic or ferromagnetic resonator material will be referred to below as the YIG sphere, while the generalizations above concerning other materials than YIG and other shapes than spheres should be kept in mind.

The frequency-tunable component for cryogenically cooled applications should have one or more input ports and one or more output ports for coupling oscillating signals to and from the YIG sphere at frequencies above 0.5 GHz. The number of ports depends on the component and its coupling to other circuitry. At least one physical port may constitute both an input port and an output port in at least some applications. Being applicable for frequencies above 0.5 GHz implies restrictions and requirements that are typical to microwave frequencies, such as the use of transmission lines of suitable kind.

A frequency-tunable component meant here comprises a controllable magnet arrangement configured to induce, in response to one or more control signals, a magnetic field at the location of the YIG sphere. A magnetic field strength, or magnetic flux density, of the induced magnetic field should be dependent on value (s) of the one or more control signal (s) . As an example, if the controllable magnet arrangement is of the kind schematically shown in fig. 2, comprising the first and second coils 204 and 205, there is one control signal: the bias current I_{BIAS} through the first and second coils 204 and 205. In such a case, the magnetic flux density at the location of the YIG sphere 201 depends on the value, i.e. magnitude, of the bias current I_{BIAS}. The direction of the magnetic flux (up or down in the geometry shown in fig. 2) depends on the sign, i.e. direction, of the bias current I_{BIAS}.

Suitability of the frequency-tunable component described here for cryogenically cooled applications is ensured with a common supporting and thermalizing frame, which is thermally coupled to both the YIG sphere and to the controllable magnet arrangement. The common supporting and thermalizing frame is configured to maintain the controllable magnet arrangement fixed with respect to the YIG sphere.

Fig. 3 shows an example of a frequency-tunable component for cryogenically cooled applications with such a common supporting and thermalizing frame. Functionally, the embodiment shown in fig. 3 corresponds to that of fig. 2. In fig. 3, the controllable magnet arrangement comprises a first superconductor coil 301 and a second superconductor coil 302, placed co-axially in a vertical stack along a common axis of cylindrical symmetry. A YIG sphere 303 is located in a cavity 304 inside the structure shown in fig. 3, on said axis of cylindrical symmetry and between the first superconductor coil 301 and the second superconductor coil 302 in the vertical direction.

In the embodiment of fig. 3, the common supporting and thermalizing frame has a form that can be schematically considered to consist of a double-E core with a transversal central slab, as shown with dashed outlines on the right in fig. 3. Whether the actual frame is built of pieces of just this form or of some other kinds of pieces is immaterial, as long as the structure is rigid and thermal conductivity is good throughout the frame. The parts that form the common supporting and thermalizing frame may be made of any material of good enough thermal conductivity, like copper for example, and attached together with any kind of suitable joints, like bolted joints for example. The first superconductor coil 301 is around a part of the common supporting and thermalizing frame consisting of the middle tab of the upper "E", and the second superconductor coil 302 is around a part of the common supporting and thermalizing frame consisting of the middle tab of the lower "E".

One input port 305 and one output port 306 are schematically shown for coupling oscillating signals to and from the YIG sphere 303 at frequencies above 0.5 GHz. The input and output ports 305 and 306 may take the physical form of, for example, coaxial connectors of the kind regularly used for signal lines of signal frequencies above 0.5 GHz in cryogenically cooled environments. Inside the middle part of the frame, couplings to and from the YIG sphere 303 may take the form of half-turn-formed loops, as is shown with dashed lines in fig. 3. The YIG sphere 303 is mechanically supported and thermally coupled to the middle part of the frame; for example, glued to the free end of a protruding aluminum oxide rod the other end of which is attached to the material of the frame at an edge of the cavity in which the YIG sphere 303 is located.

Wires 307 and 308 for conducting the bias current to and from the superconductor coils 301 and 302 are only schematically shown in fig. 3. Advantageous details with which such wire connections can be implemented in practice are described later in this text.

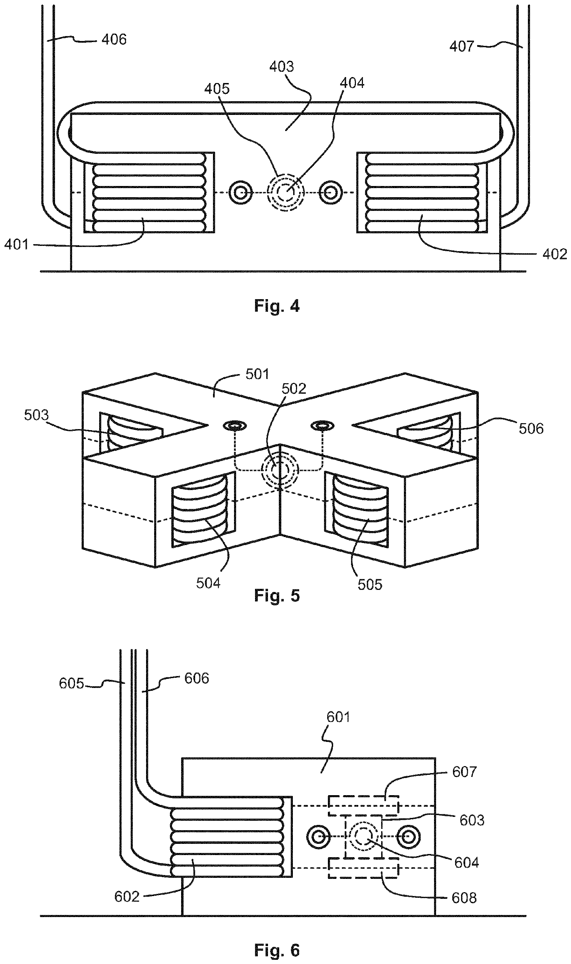

In the geometry of fig. 3, the magnetic permeability of the material used for the common supporting and thermalizing frame is not important, because the coaxial arrangement naturally concentrates the magnetic field at the location of the YIG sphere. In other embodiments, it is possible to use materials of high magnetic permeability to confine and guide the magnetic field. Fig. 4 shows a frequency-tunable component for cryogenically cooled applications according to such an embodiment.

In fig. 4, first and second superconductor coils 401 and 402 are each around a side branch of a branched core 403, which constitutes the common supporting and thermalizing frame of the frequency-tunable component. The first and second superconductor coils 401 and 402 constitute a controllable magnet arrangement that is configured to induce, in response to bias current, a magnetic field at the location of a YIG sphere 404 located in a cavity 405 in the middle branch of the structure. The upper and lower halves of the branched core 403 are made of a material of high magnetic permeability, with the result that a large majority of the magnetic flux will go through and have a vertical orientation in the part of the branched core 403 between the first and second superconductor coils 401 and 402. Couplings to and from the YIG sphere 404 for oscillating signals at frequencies above 0.5 GHz are similar to those in the embodiment of fig. 3, as are the schematically shown wires 406 and 407 for the bias current through the first and second superconductor coils 401 and 402.

Fig. 5 illustrates an embodiment that could be considered as a generalization of the principle shown in fig. 4. In fig. 5 the branched core 501 is not two-ended like in fig. 4 but four-ended, with the YIG sphere 502 located in a cavity in the middle. There are a total of four superconductor coils 503, 504, 505, and 506, with the material (of high magnetic permeability) of the branched core 501 again directing and confining the magnetic flux so that a large majority thereof is concentrated at the location of the YIG sphere 502. Couplings to and from the YIG sphere 502 for oscillating signals at frequencies above 0.5 GHz are similar to those in the embodiment of fig. 3. Wires for conducting bias currents through the four superconductor coils 503, 504, 505, and 506 are not shown in fig. 5 for reasons of graphical clarity.

Fig. 6 illustrates an embodiment that could, in some respects, be considered as a simplification of the principle shown in fig. 4. In fig. 6 the core 601 is a ring core with a superconductor coil 602 around one part of it. Inside another part of the ring core 601 is a cavity 603, in which the YIG sphere 604 is located. Couplings to and from the YIG sphere 604 for oscillating signals at frequencies above 0.5 GHz are similar to those in the embodiment of fig. 3, as are the schematically shown wires 605 and 606 for the bias current through the superconductor coil 602.

A feature in the embodiment of fig. 6, which could be also applied in other embodiments, is the use of permanent magnets as a part of the controllable magnet arrangement. Permanent magnets 607 and 608 are located in respective cavities inside the material of the core 601, above and below the cavity 603 in which the YIG sphere 604 is located. Opposite poles of the permanent magnets 607 and 608 are directed towards each other, so that the permanent magnets 607 and 608 maintain a constant, essentially homogeneous, vertically oriented magnetic flux at the location of the YIG sphere 604. Later in this text it is described how the value of the magnetic flux density through the YIG sphere has an effect on a frequency response of the frequency-tunable component; achieving a suitable controllable range of the frequency response may be easier if there is always a certain constant component of magnetic flux. This may ease the requirements imposed on the coil(s) or other electromagnetic component(s) that may be used to produce a variable component of the magnetic flux.

The coils or other electromagnetic components that are used to produce a variable (component of) magnetic flux at the location of the YIG sphere are mostly referred to above as superconductor coils. While the use of superconductors is not necessary in all embodiments, it is of great advantage in ensuring that large enough magnetic flux densities can be achieved with small enough dissipation of power. An advantageous material for superconductor coils is insulated conductor wire that comprises one or more superconductor cores embedded in a normal-metal matrix. For simplicity, all types of wire with which superconductivity can be achieved may be called superconductor wires.

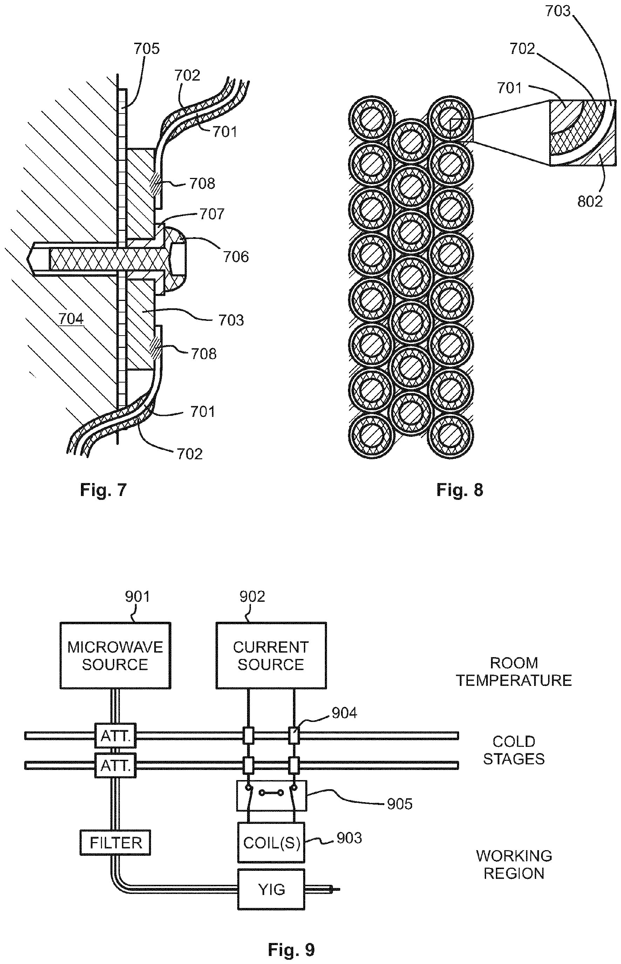

Fig. 7 shows an example of how a connection can be made between two ends of an insulated conductor wire that comprises a superconductor core embedded in a normal-metal matrix. The wire used in fig. 7 may be for example a polymer-coated single-core superconducting NbTi wire in copper matrix. The polymer coating is not shown in fig. 7 for reasons of graphical clarity, while the NbTi core is shown with reference designator 701 and the copper matrix with reference designator 702.

The quality of connections in superconductor wires are of importance, in particular if the component including the superconductor wire is meant to be used in cryogenically cooled applications in which the available cooling power may be limited. For example, a dilution refrigerator that cools a quantum computing circuit or other setup to a temperature of only some millikelvins may have its cooling power measured in microwatts at the lowest temperatures. Ohmic losses in wire connections could lead to undesired warming, which in turn could result in magnet quenches or at least difficulties in reaching and maintaining the desired low temperature.

For making the connection in fig. 7, both ends of the insulated conductor to be connected comprise a bare section of the (one or more) superconductor core(s) without the normal-metal matrix. From a polymer-coated single-core superconducting NbTi wire in copper matrix it is possible to etch off the copper layer with citric acid.

It would be possible to connect the two bare, superconductive wire ends directly to each other. However, better structural stability and thermalization can be achieved with the structure shown in fig. 7. A piece 703 of superconductor material, such as niobium, is provided. The bare section of the respective end of the insulated conductor wire is fixedly attached to the piece 703 of superconductor material. A thermally conductive but electrically insulating coupling is provided between the piece 703 of superconductor material and a cooled structure 704. In fig. 7, such a thermally conductive but electrically insulating coupling comprises a slab 705 of thermally conductive but electrically insulating material such as Kapton tape between the piece 703 of superconductor material and the cooled structure 704. A bolt 706 with an insulating washer 707 make the mechanical attachment.

The cooled structure 704 may be, for example, a cooled part belonging to the general structure of the cryostat. Such a cooled part may be located at the target region or working region of the cryostat, which means the stage(s) cooled to the base temperature of a dilution refrigerator. Alternatively, in particular if the thermal loading of the target region would otherwise become excessive, such a cooled part may be located at some slightly warmer stage of the cryostat, like at a 100 mK stage, a 1 K stage, or a 3 K stage.

The cooled structure 704 may be (a part of) the common supporting and thermalizing frame of the frequency-tunable component. The lower superconductor wire in fig. 7 may be one of the wires to or from the superconductor coil(s) in the frequency-tunable component, while the upper wire may be a part of further wiring towards one or more bias current source. This way the structure shown in fig. 7 could offer a connecting point, so that the frequency-tunable component can be manufactured separately and installed onto a suitable flange or other structure of the cryostat, and only the end of said further wiring needs to be connected in association with the installing.

Spot welding is an example of a method for fixedly attaching the bare section of the respective end of the insulated conductor wire to the piece 703 of superconductor material. Spot welds are schematically shown with reference designator 708 in fig. 7. Spot welding of this kind ensures a continuous superconductive connection with virtually no intermediate boundary surfaces from the incoming superconductor wire to the outgoing superconductor wire. If additional support and/or thermalization is needed at and/or around the spot-welded points, these may be later embedded with a potting compound such as Loctite Stycast available from Henkel Adhesives. Loctite and Stycast are registered trademarks of Henkel Corporation.

Fig. 8 is a schematic cross section of a part of a superconductor coil. The superconductor wire used to manufacture the superconductor coil is here assumed to be similar to that above in the description of fig. 7. The NbTi core 701, the copper matrix 702, and the insulating polymer layer 801 are seen in the partial enlargement in the upper right part of fig. 8. For sufficient thermalization, it is advantageous to ensure as good thermal conductivity throughout the layers of superconductor wire in the superconductor coil. In fig. 8, this is achieved by soaking each layer of superconductor wire with varnish such as VGE-7031 available from General Electrics company. The cured varnish that fills the voids between turns of the superconductor wire is shown with reference designator 802 in fig. 8.

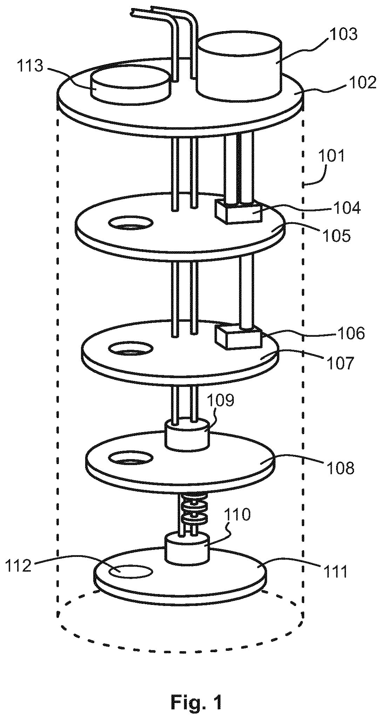

Fig. 9 illustrates schematically some parts of a cryogenic cooling system. Following a usual basic structural principle, the cryogenic cooling system has several progressively colder so-called cold stages between a room temperature environment and a working region. An outer cover, which is not shown in fig. 9, is provided for separating the cryogenically cooled domain from the environment of the cryogenic cooling system. The outer cover may be for example an outer vacuum can, inside of which are all the cryogenically cooled parts. The structural principle of the cryogenic cooling system may be, for example, of the kind explained earlier with reference to fig. 1.

In the embodiment of fig. 9, a microwave source 901 and a current source 902 are located in the room temperature domain, i.e. the environment of the cryogenic cooling system. The microwave source 901 produces microwave signals, at least some of which are to be directed to and processed by a frequency-tunable component in the cryogenically cooled domain. Comparing to the principle explained above with reference to fig. 3, a microwave signal originating from the microwave source 901 may be directed into the input port 305, and a signal processed by the frequency-tunable component may then come out of the output port 306. What such a processed signal is then used for is outside the scope of this description. Microwave signals may pass through additional circuit elements like attenuator(s) and filter(s) on their way from the microwave source 901 to the frequency-tunable component, as is schematically shown in fig. 9.

The controllable magnet arrangement of the frequency-tunable component is shown schematically as the coil(s) block 903 in fig. 9. Control signal wiring leads from the outside of the outer cover to the controllable magnet arrangement 903.

The control signal wiring comprises sections located in parts of the cryogenic cooling system that are configured for cooling to progressively colder temperatures. At least those sections of the control signal wiring that are located in the part of the cryogenic cooling system configured for cooling to the lowest temperature are advantageously made of superconductor wire. It is advantageous to thermalize such superconductor wires at certain points, like at the stages of the cryogenic cooling system that lead from the 4 K stage to the 10 mK (or, more generally: the coldest) stage. This can be done for example by using copper bobbins at said stages. One of such thermalization points is shown with reference designator 904 in fig. 9.

In case the superconductor wire used comprises one or more superconductive cores embedded in a normal-metal matrix, it is advantageous to have one or more thermal breaks to prevent thermal shunting, i.e. to keep heat from the warmer stages from becoming conducted towards the colder stages through the control signal wiring. A thermal break of this kind can be made for example in a form of one or more sections of the superconductor wire of which the normal-metal matrix has been removed.

An optional feature shown schematically in fig. 9 is a so-called persistent-current switch 905. While graphically represented as a kind of mechanical switch in fig. 9, in practice a persistent-current switch could be for example a segment of the same superconducting wire with a heater shunting the magnetic circuit. In the state shown in fig. 9, the persistent-current switch 905 allows the current source 902 to feed a control signal in the form of a bias current to the controllable magnet arrangement 903. If the latter is completely superconductive, once the supercurrent therethrough is running it is possible to change the state of the persistent-current switch 905 so that it isolates the controllable magnet arrangement 903 from all external sources, allowing the established supercurrent to just circulate within the controllable magnet arrangement 903. This would further reduce power dissipation in the control signal wiring.

### EXAMPLE

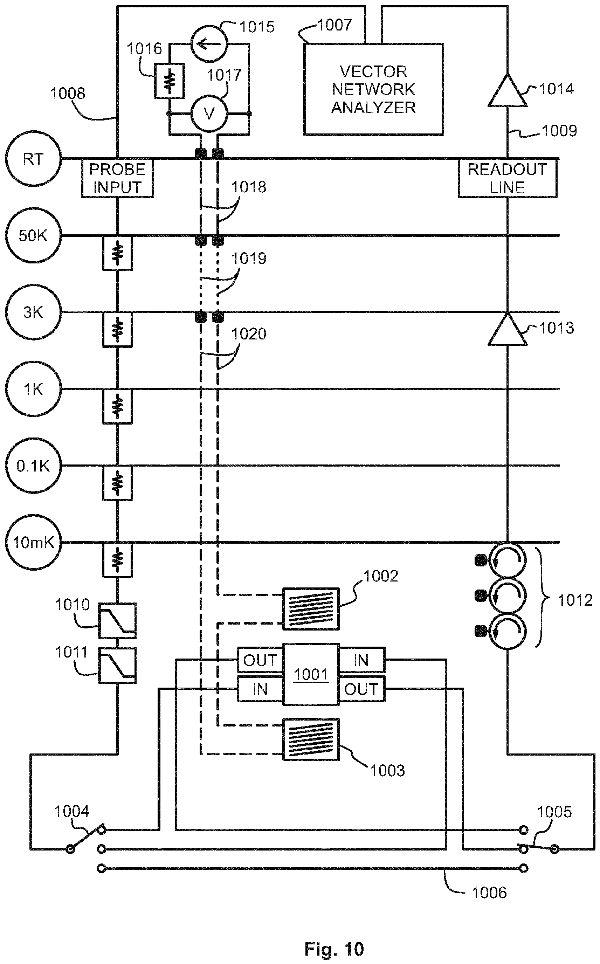

To verify the operation and applicability of the invention in practice, an arrangement like that schematically shown in fig. 10 was built. The six horizontal lines represent the room temperature, 50 K, 3 K, 1 K, 0.1 K, and 10 mK flanges respectively of a cryogenic cooling system equipped with mechanical precooling and a dilution refrigerator. At the working region, i.e. the coldest stage of the cryostat, a frequency-tunable component having the overall structural appearance of fig. 3 was placed, with the exception that in the cavity 1001 between the two superconductor coils 1002 and 1003 it comprised two YIG spheres with their respective input and output ports. The superconductor coils of the frequency-tunable component were wound of superconductor wire with a single NbTi core of 0.185 mm embedded in a copper matrix and coated with an insulating polymer layer, the total diameter of the wire being 0.33 mm. The vertical dimension of each of the first and second superconductor coils was 33 mm.

Controllable microwave switches 1004 and 1005 were installed so that an operator of the system could select a transmission path through the input and output ports coupled to the first YIG sphere, through the input and output ports coupled to the second YIG sphere, or through a bypass line 1006 for measurements. In a measurement setup like this, each YIG sphere and its couplings could be considered a frequency-tunable band-pass filter for microwave signals at frequencies above 0.5 GHz.

A vector network analyser 1007 in the room temperature environment was used both to transmit oscillating signals in a controllable frequency range between 3 and 8 GHz through a probe input line 1008 and to measure the output signal coming through a readout line 1009. From the probe input the signal passed through a series of microwave attenuators at each colder temperature stage, the attenuation levels being 1 dB at 50 K, 20 dB at 3 K, 0 dB at 1 K, 20 dB at 0.1 K, and 20 dB at 10 mK. Between the last-mentioned attenuator and the first microwave switch 1004, the input line passed through an FLP-1250 microwave low-pass filter 1010 from Marki Microwave and through a coaxial infrared filter 1011 from Bluefors Oy, both filters being located at and thermalized to the working region of the cryostat.

The output signal obtained through the second microwave switch 1005 was directed through a series of microwave isolators 1012 at the working region, as well as through a HEMT (high-electron-mobility transistor) amplifier 1013 at the 3 K temperature stage. A further amplifier 1014 for the output signal was provided in the room temperature environment.

A controllable current source 1015 was used to generate bias currents between approximately 2 and 5 amperes that were directed, through a current-limiting resistor 1016, as control signals to the circuit that involved the superconductor coils 1002 and 1003. A voltmeter 1017 was provided for monitoring the voltage across the bias current input lines. Between the room temperature and 50 K stages, copper leads 1018 were used to conduct the bias current. Between the 50 K and 3 K stages, high-temperature superconductor wires 1019 were used. Below the 3 K stage, the wires 1020 used for the bias current were of the kind described above (NbTi core, copper matrix, polymer insulation) with reference to the two superconductor coils 1002 and 1003.

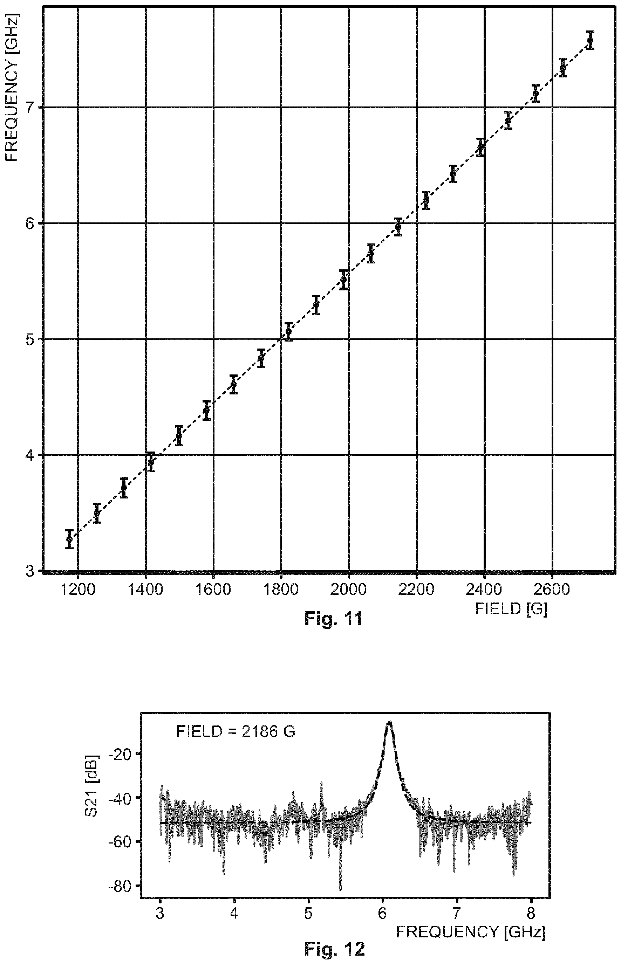

The range of magnetic flux density (or magnetic field for short) that could be obtained with the bias currents used ranged from about 1100 G to about 2800 G. Fig. 11 illustrates the measured centre frequency and FWHM (full width half maximum) pass-band width of the frequency-tunable band-pass filters constituted by the YIG spheres and their couplings. It can be seen that the pass-band width remained almost constant throughout the measured range, with the measured centre frequency changing almost linearly between about 3.27 GHz and 7.59 GHz as a function of the magnetic flux density. The excellent linearity and constant width of the pass-band in the measured range suggest that the same structure could function well as a band-pass filter also at centre frequencies well below 3 GHz and well above 7 GHz.

Fig. 12 shows the measured value of the S21 parameter as a function of input signal frequency with a fixed bias current value that produced a magnetic flux density of 2186 G. The measured S21 values are shown plotted with the gray line, while the black dashed line illustrates a fit to a Lorentzian function. From the graph it can be observed that the frequency response of a YIG filter of this kind has a smooth and regularly formed passband of less than 200 MHz around a clear and distinct centre frequency.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A frequency-tunable component for cryogenically cooled applications, comprising:
- a piece of solid ferrimagnetic or ferromagnetic resonator material with an unloaded Q value larger than 400, referred to below as the YIG sphere (201),
- one or more input ports (305) and one or more output ports (306) for coupling oscillating signals to and from said YIG sphere (201) at frequencies above 0.5 GHz,
- a controllable magnet arrangement (204, 205, 301, 302, 401, 402, 503, 504, 505, 506, 602, 903, 1002, 1003) configured to induce, in response to one or more control signals, a magnetic field at a location of said YIG sphere (201), a magnetic flux density of said induced magnetic field being dependent on values of said one or more control signals, and
- a common supporting and thermalizing frame (403, 501, 601), thermally coupled to said YIG sphere (201) and to said controllable magnet arrangement (204, 205, 301, 302, 401, 402, 503, 504, 505, 506, 602, 903, 1002, 1003) and configured to maintain said controllable magnet arrangement (204, 205, 301, 302, 401, 402, 503, 504, 505, 506, 602, 903, 1002, 1003) fixed with respect to said YIG sphere (201).

2. A frequency-tunable component according to claim 1, wherein said controllable magnet arrangement (204, 205, 301, 302, 401, 402, 503, 504, 505, 506, 602, 903, 1002, 1003) comprises at least one superconductor coil (301, 302, 401, 402, 503, 504, 505, 506, 602, 903, 1002, 1003) around a part of said common supporting and thermalizing frame (403, 501, 601).

3. A frequency-tunable component according to claim 2, wherein:
- said controllable magnet arrangement comprises a first superconductor coil (301, 1002) and a second superconductor coil (302, 1003), placed along a common axis of cylindrical symmetry (206),
- said YIG sphere (201) is located on said axis of cylindrical symmetry (206), between said first superconductor coil (301, 1002) and said second superconductor coil (302, 1003) in a longitudinal direction of said axis.

4. A frequency-tunable component according to any of claims 2 or 3, wherein said one or more control signals are one or more bias currents through said superconductor coils (301, 302, 401, 402, 503, 504, 505, 506, 602, 903, 1002, 1003).

5. A frequency-tunable component according to any of claims 2 to 4, wherein said superconductor coils (301, 302, 401, 402, 503, 504, 505, 506, 602, 903, 1002, 1003) are wound of insulated conductor wire that comprises one or more superconductor cores (701) embedded in a normal-metal matrix (702).

6. A frequency-tunable component according to claim 5, wherein, for connecting said first and second superconductor coils (301, 302, 401, 402, 503, 504, 505, 506, 602, 903, 1002, 1003) to one or more bias current sources (902), ends of said insulated conductor wire comprise a bare section of said one or more superconductor cores (701) without said normal-metal matrix (702).

7. A frequency-tunable component according to claim 5, comprising, per each end of said insulated conductor wire:
- a piece of superconductor material (703) to which the bare section of the respective end of the insulated conductor wire is fixedly attached, for offering a connecting point for further wiring towards said one or more bias current sources (902), and
- a thermally conductive but electrically insulating coupling (705, 706, 707) between said piece of superconductor material (703) and a cooled structure (704).

8. A frequency-tunable component according to claim 7, wherein said respective end of the insulated conductor wire is spot welded to said piece of superconductor material (703).

9. A frequency-tunable component according to any of the preceding claims, wherein the frequency-tunable component is a filter, a circulator, a gyrator, an isolator, or a resonator.

10. A cryogenic cooling system, comprising:
- at least one frequency-tunable component according to any of the preceding claims,
- an outer cover for separating a cryogenically cooled domain from an environment of the cryogenic cooling system, and
- control signal wiring (1018, 1019, 1020) leading from the outside of the outer cover to the controllable magnet arrangement (1002, 1003) of the at least one frequency-tunable component.

11. A cryogenic cooling system according to claim 10, wherein:
- said control signal wiring (1018, 1019, 1020) comprises sections located in parts of the cryogenic cooling system that are configured for cooling to progressively colder temperatures, and
- at least those sections (1019, 1020) of the control signal wiring that are located in the part of the cryogenic cooling system configured for cooling to the lowest temperature are made of superconductor wire.

12. A cryogenic cooling system according to claim 11, wherein:
- said superconductor wire comprises one or more superconductive cores (701) embedded in a normal-metal matrix (702), and
- said sections (1019, 1020) of the control signal wiring that are made of said superconductor wire comprise thermal breaks in the form of sections of the superconductor wire of which said normal-metal matrix (702) has been removed.
